# EUROPEAN PATENT APPLICATION

(11) **EP 3 812 113 A1**
(43) Date of publication of application: **28.04.2021**
(21) Application number: 19204677.9
(22) Date of filing: 22.10.2019
(51) Int. Cl.: B27K 3/02, B27K 3/15, B27K 5/00, C08L 61/06

(54) **METHOD FOR PREPARATION OF DENSIFIED WOOD ARTICLE**

(71) Applicant: Metadynea Austria GmbH, 3500 Krems (AT)
(72) Inventor: KANTNER, Wolfgang, 3900 Schwartzenau (AT); ZICH, Thomas, 4020 Linz (AT); SCHWARZKOPF, Matthew John, 6000 Koper (SI); BURNARD, Michael David, 6000 Koper (SI); MIKULJAN, Marica, 1385 Nova vas (SI); KUTNAR, Andreja, 1291 Slovenia (SI)
(74) Representative: Hoyng Rokh Monegier B.V.

(57) **Abstract**

The invention relates to a method for preparing a densified wood article comprising vacuum impregnating a porous low-density type of wood with a specified aqueous phenol-formaldehyde resin composition and pressing. The invention also relates to a densified wood article obtainable by the process having a very low set-recovery. The invention further relates to an aqueous phenol-formaldehyde resin composition according to the invention, a method process for the preparation thereof and to the use thereof in a method for preparing a densified wood article. The densified wood article can be used in high value-added applications like flooring or furniture.

## Description

### BACKGROUND OF THE INVENTION

### 1. Field of the Invention

The invention relates to a method for preparing a densified wood article comprising impregnating a porous low-density type of wood with an aqueous phenol-formaldehyde resin composition and pressing and to a densified wood article obtainable by the process. The invention further relates to an aqueous phenol-formaldehyde resin composition, a method process for the preparation thereof and to the use thereof in a method for preparing a densified wood article. The densified wood article or a part of the densified wood article can be used in high value-added applications.

### 2. Description of the background Art

Already in 1916 methods were disclosed for impregnating wood with chemicals. US1198040 presents a method of impregnating wood with substituted polynitrophenols by pressure or vacuum.

Haygreen, J. G., and Daniels, D. H. Wood and Fiber 1: 38-53, 1969 title: simultaneous drying and densification of sapwood discloses a process for densifying thin wood planks. The wood is plasticized, by heat, moisture and/or wood swelling resinoids. Treatment can be accomplished by soaking green sapwood in undiluted water-soluble phenol formaldehyde resin. The material is then stored for over 5 days. Samples were end-coated and soaked in undiluted phenol formaldehyde resinoid for 16 and 72 hours. After soaking, the samples were wrapped and stored at room temperature for 120 hours prior to densification. Densification was performed by pressing the wood in a press to the desired thickness and the position maintained until wood was dry. After pressing, the product is conditioned under moderate humidity conditions to the desired final moisture content.

JPH11151703 discloses method of injecting chemicals into compression-moulded wood. The wood heat softened by compressing in a press moulding machine and immobilised, for example by cooling and then injecting chemicals like wood modifiers, flame retardants, insecticides etc. for example by vacuum impregnation.

US4606388 discloses a process for densifying low-density woods. A green solid wood member having a high moisture content is impregnated with anhydrous ammonia to plasticize the wood, then placed in a cyclic press and subjected to a plurality of low-pressure compression cycles at a temperature below 100°C.

WO2004/056542 discloses a method for manufacturing a compressed wood product. The method comprises two compression stages: a first compression stage; a chemical diffusion impregnation/vacuum pressure bath/tank step; a second compression step including chemical infiltration; annealing, cooling and curing. The chemical to be impregnated is a fatty acid.

EP3470189 discloses a method of obtaining an ornamental laminate veneer product. The method comprises impregnating veneer wood layers with an aqueous phenol-formaldehyde resin comprising a dye, providing a glue to each layer, stacking different layers according to the colour requirement to a veneer stack followed by compacting the veneer by hot pressing the entire stack at a high pressure and temperature.

Manoj Kumar Dubey, in a PhD thesis in Forestry at the University of Canterbury, May 2010, describes a process for densifying wood comprising impregnating vegetable oil into wood. The oil heat-treatment of the wood resulted in increased water repellence and reduced hygroscopicity and thus reduced set recovery.

Commercial Thermo Hydro Mechanical (THM) processes are known that rely on resin impregnation performed on veneer or coniferous wood species.

The thermosetting resins in combination with THM treatment have been used on veneers to produce multi-laminated material in sheet form. Examples are Compreg®, Delignit®, Dehonit®, Permawood®, Permali®, RANPREX®, and products manufactured by Insulcul Services Ltd. and Surendra Composites Private Ltd.

Several other wood densification processes have been developed where heat and/or steam combined with mechanical compression are used without resin or other chemicals. Examples of such processes are CaLignum process, moulding or 3D-shaping, wood densification and post treatment in a closed THM system, Viscoelastic Thermal Compression (VTC) for surface densification.

Thus, it is known that the density of wood can be increased by compressing the porous structure under suitable moisture and temperature conditions to improve surface hardness for example for flooring products. After compression, however, the deformed wood material is sensitive to moisture and a high percentage of the deformation is recovered in moist environment, in particular when soaking in water. This recovery phenomenon, termed set-recovery, has been addressed in the prior art in various ways, by modifying the wood after densification.

However, a problem underlying the invention is that the moisture-induced swelling of the densified wood back to the original shape (set-recovery) is still too high. This is a particular problem in monolithic wood slabs used for high value-added applications such as construction beams, furniture and flooring. The high set recovery implies dimensional instability which leads to deformations that are unacceptable in applications where the wood must fit in a construction. Such high-end uses also impose strict and demanding requirements on low chemicals emission. Therefore, in such applications tropical hardwood is still used a lot, which is becoming more and more unacceptable in view of deforestation problem. The set recovery of the prior art densified wood articles is a major obstacle preventing the widespread commercialization of densified wood products. Therefore, there is still a desire for a process for the manufacture of a densified wood product and resulting product that does not have one or more of the abovementioned problems.

### SUMMARY OF THE INVENTION

According to the invention one or more of the mentioned problems have been solved by providing a method for preparing a densified wood article, comprising
i. Providing a wood article, said wood article:
   a) having at least two substantially parallel surface planes having an initial thickness TH1 defined as the distance between the substantially parallel surface planes,
   b) said initial thickness TH1 preferably being at least 5 mm,
   c) is a porous low-density type of wood having a density of preferably lower than 700 g/cm³, more preferably between 100 and 600, more preferably between 200 and 500 g/cm³,
   d) preferably a deciduous or coniferous wood type,
ii. preferably conditioning the provided wood article for ensuring equilibrium moisture content, preferably at a temperature between 15 and 25 °C and at a relative humidity RH between 55 and 80%, most preferably around 20°C and 65% RH,
iii. Providing an aqueous phenol-formaldehyde (PF) resin composition, said aqueous phenol-formaldehyde resin composition:
   a) having a 20 - 50 wt.%, preferably 30 - 40 wt.% solids content, wherein wt.% is defined as the dry resin solids weight relative to the total weight of water and resin in the composition,
   b) comprising phenol-formaldehyde resin oligomers having a low weight average molecular weight (Mw), as measured by size exclusion chromatography SEC of 150 - 700, preferably 200 - 500 g mol⁻¹,
   c) having a period of infinite water dilutability exceeding 4, preferably 6 weeks storage at 25°C or 8 weeks at 20°C
   d) having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
   e) preferably having a viscosity between 50 and 250 mPas, more preferably between 90 and 130, most preferably around 115 mPas (determined at 20°C with viscometer MCR 51 from Anton Paar with cone CP50-1 and a shear rate of 1/200),
   f) comprising an alkaline catalyst,
   g) preferably having a pH value of between 7.5 and 11, preferably around 10,
   h) preferably not comprising urea, urea-derivatives or other formaldehyde scavengers,
iv. vacuum impregnating the wood article with the resin composition,
   ∘ preferably at a pressure Pi below 0.01 bar and for a time ti between 10 and 240 minutes, preferably P is around 0.001 bar and ti is around 60 minutes,
   ∘ whereby the resin content of the wood article after vacuum impregnation preferably is between 25 % and 45 %, more preferably between 30 % and 40 % weight of the unimpregnated wood article,
v. drying the resulting impregnated wood article,
   ∘ the drying preferably comprising an oven drying step and more preferably also a preceding air-drying step,
   - wherein the oven drying step is at a temperature Td between 50 and 80°C, preferably about 60 °C, for a time between 48 and 60 hours, and
   - wherein the optional preceding air-drying step is done for at least 24 hours preferably in ambient air,
vi. performing a thermal hydro mechanical treatment on the dried impregnated wood article to produce the densified wood article, said treatment comprising compressing the dried impregnated wood article at elevated temperature,
   ∘ wherein compression force is applied to the dried impregnated wood article to reduce the thickness to a final thickness TH2 between 25% and 80% of the initial thickness TH1,
   ∘ wherein the temperature of the dried impregnated wood article T_{WA} is raised to cure the impregnated phenol-formaldehyde resin, preferably to a Twa between 125 and 250, preferably between 150 and 200, more preferably about 170 °C,
   ∘ cooling the obtained densified wood article,
vii. optionally post-conditioning the densified wood article at ambient conditions, preferably at 20°C and 65 % relative humidity,
whereby the resulting densified wood article has a set recovery, defined as a percentage increase to thickness TH3 after 24h/20°C water soaking ((TH3-TH2)/TH2x100%), less than 7%, preferably less than 5% and more preferably less than 3 or 2 %.

The process of the invention results in low- to mid-density wood gaining increased density, hardness, abrasion resistance, and improvement of strength properties. The method of the invention provides a significant use for low density wood types which otherwise are underutilised.

In another aspect the invention relates to an aqueous phenol-formaldehyde resin composition for the manufacture of densified wood articles and to a process for the manufacture of the aqueous phenol-formaldehyde resin.

The invention also relates to the densified wood article obtainable by the method. This densified wood article can replace tropical hardwood like ebony in many applications and can be used for flooring, construction beams, furniture and similar applications and as a result of the good impregnation can be processed by machine tooling. The densified wood article has enhanced wood and wood-composite properties related to dimensional stability, colour stability, exterior exposure, acoustics, and resistance against fungi, termites and other pests.

### BRIEF DESCRIPTION OF THE DRAWINGS

Figure 1 shows a schematic representation of the process of the invention,
Figure 2 shows density profiles of the various densified wood samples, showing the density as a function of the depth along the thickness direction of the densified wood samples.
Figure 3 show the set recovery of several densified wood samples as a function of repeated moisture exposure cycles.

### DETAILED DESCRIPTION OF THE INVENTION

As described above the method for preparing a densified wood article, comprises as a first step the providing of a wood article. The wood article can in principle have various shapes but in view of the preferred method of compressing using a hot press, said wood article preferably is a flat shaped article having at least two substantially parallel surface planes and an initial thickness TH1 defined as the distance between the substantially parallel surface planes. The wood article can be a monolithic wood slab but the method according to the invention in principle also works for a laminated wood (veneer) or wood particle board articles.

The initial thickness TH1 is in principle not limited, but for practical purposes is preferably at least 5 mm. Because the invention has proven very suitable for densifying thicker monolithic wood slabs, the thickness TH1 of the wood article, in particular of a monolithic wood slab, is preferably at least 10, 20 or even at least 30 mm.

The wood type is a porous low-density type of wood having a density of preferably lower than 700 g/cm³, more preferably between 100 and 600, more preferably between 200 and 500 g/cm³ and preferably is a deciduous or coniferous wood type. Suitable examples of low-density wood are known in the art, typically green woods, sapwoods, poplar, alder, maple, birch, aspen, cypress, pines, spruces are used.

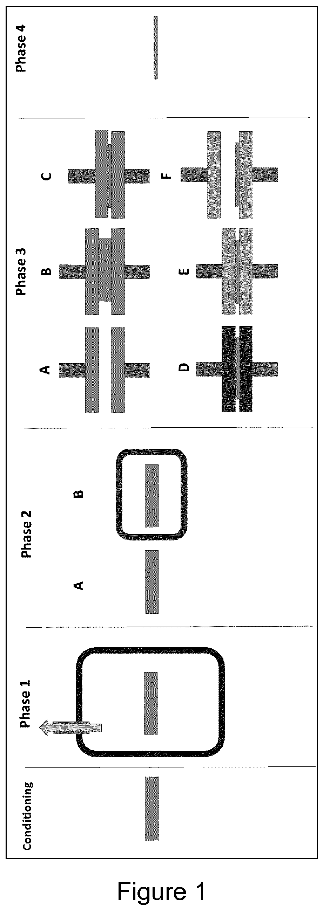

Figure 1 shows a schematic representation of the process of the invention comprising from left to right the step of providing hot platens and conditioning the wood, vacuum impregnating the wood (phase 1), air drying (phase 2A) and oven drying (phase 2B), subsequently in phase 3 from A to F proving a hot press, inserting the wood sample and pressing the wood sample (B and C), heating the platens to a higher temperature (D), cooling the platens (E), removing the pressure, opening the mould to remove the densified wood sample (F), post-conditioning the wood (phase 4).

It was found to be important that before impregnation the provided wood article is moisture conditioned for ensuring equilibrium moisture content. The advantage is a better diffusion of the PF resin throughout the wood article in the impregnation step. Without being bound by theory it is believed that this conditioning prevents a too quick absorption of water from the aqueous PF resin composition, which may destabilise the aqueous PF resin composition, may hinder in diffusion of the PF resin throughout the wood article and maybe even cause PF resin precipitation in the surface area. Preferably, the provided wood article is conditioned at a temperature between 15 and 25°C and at a relative humidity RH between 55 and 80%, most preferably around 20°C and 65% RH. If the wood article has the right moisture content the conditioning step can be omitted.

For the impregnation step an aqueous phenol-formaldehyde (PF) resin composition is provided having a 20 - 50 wt.%, preferably 30 - 40 wt.% solids content, wherein wt.% is defined as the dry resin solids weight relative to the total weight of water and resin in the composition. The phenol-formaldehyde resin in the aqueous PF resin composition is phenol-formaldehyde oligomer resin having a low weight average molecular weight (Mw), as measured by size exclusion chromatography SEC of 150 - 700, preferably 200 - 500 g mol-1. On the other hand, despite of the low molecular weight of the resin, the free monomer content is low, preferably the aqueous PF resin composition has a free phenol and free formaldehyde content each less than 0.7 wt.%, preferably less than 0.5 wt.% and more preferably having a total free phenol and free formaldehyde content less than 0.7 wt.% relative to the total weight of the PF resin composition. The aqueous PF resin composition provides good impregnation properties combined with low QESH risk even in a preferred embodiment not comprising urea, urea-derivatives or other formaldehyde scavengers.

Further, it is desired that the aqueous PF resin composition has a high storage stability expressed as a period of time that the aqueous PF resin composition maintains infinite water dilutability, which preferably is at least 4, preferably 6 weeks storage at 25°C or 8 weeks at 20°C. Other preferred features are a viscosity between 50 and 250 mPas, more preferably between 90 and 130, most preferably around 115 mPas (determined at 20°C with viscometer MCR 51 from Anton Paar, with cone CP50-1 and a shear rate of 1/200).

The composition comprises an alkaline catalyst to catalyse the curing of the resin in the wood product. Preferably, the composition has a pH value of between 7.5 and 11, preferably around 10.

The next step is vacuum impregnating the wood article with the aqueous PF resin composition, preferably at a pressure Pi below 0.01 bar and for a time ti between 10 and 240 minutes, preferably P is around 0.001 bar and ti is around 60 minutes. The resin content after impregnation preferably is between 25 % and 45 %, most preferably between 30 % and 40 % of the unimpregnated wood weight. The vacuum impregnation is a known procedure and can be done e.g. by immersing the wood article with the aqueous PF resin composition and then applying vacuum.

It is important that after the impregnation the impregnated wood article is dried to remove at least part, preferably substantially all water. The drying step preferably comprises an oven drying step and more preferably also a preceding air-drying step. The oven drying step is preferably at a temperature Td between 50 and 80°C, preferably about 60 °C, for a time between 48 and 60 hours, and the optional preceding air-drying step is done for at least 24 hours preferably in ambient air, which is inexpensive.

The next step is performing a thermal hydro mechanical (THM) treatment on the dried impregnated wood article to produce the densified wood article. Known THM treatment use only heat, water, and mechanical pressure to compress and densify wood. This results in increased density, hardness, abrasion resistance, and improvement to some strength properties. During the THM process, wood is softened by heat and moisture and compressed, resulting in densification without fracturing the wood cell walls, the critical component of wood that provides its mechanical properties. The densified wood will maintain its shape if it is cooled under pressure. However, with this known process the dimensional stability is poor and long processing times of usually several hours are needed. These disadvantages have been overcome in the present invention wherein the THM treatment comprises compressing the dried PF resin impregnated wood article at elevated temperature, wherein compression force is applied to the dried impregnated wood article to reduce the thickness to a final thickness TH2 between 25% and 80% of the initial thickness TH1. The temperature Twa of the dried impregnated wood article is raised to cure the impregnated phenol-formaldehyde resin, preferably to a Twa between 125 and 250°C, preferably between 150 and 200°C, more preferably about 170 °C, followed by cooling the obtained densified wood article.

The curing of the PF resin at elevated temperatures is done after compression, but the heating is not necessarily a separate subsequent step as the temperature can also be raised by heating during compressing and some limited pre-curing can occur also during pressing. The densified wood article is maintained in the compressed state until the resin curing has substantially fixed the shape of the densified wood product. Then the densified wood article can be cooled, preferably also maintaining the compressed state.

Preferably the obtained the densified wood article is post-conditioned at ambient conditions, preferably at 20°C and 65 % relative humidity to provide dimensional stability.

The resulting densified wood article has a set recovery, defined as a percentage increase to thickness TH3 after 24h/20°C water soaking ((TH3-TH2)/TH2x100%), less than 7%, preferably less than 5% and more preferably less than 3 or 2 %.

In a preferred embodiment, in the method according to the invention the thermal hydro mechanical treatment comprises compressing the dried impregnated wood article at elevated temperature between platens of a mechanical press, comprising in
a. Phase a; heating the press platens, preferably to a temperature Tp1 between 125 and 250, preferably between 150 and 200, more preferably about 170 °C,
b. Phase b; placing the dried impregnated wood article in the press and pressing to the envisaged thickness TH2, preferably with an applied pressure P, preferably between 6.5 kPa and 34.0 kPa, more preferably between 13.0 kPa and 27.0 kPa, more preferably about 20 kPa,
c. Phase c; when a target thickness TH2 is reached, holding the pressure for a time between 1 - 5 minutes, preferably 2 - 3 minutes to reduce stresses in the article that could result in spring back and allow curing of the resin,
d. Phase d; increase the platen temperature to a higher temperature Tp2 between 170 and 250 °C, preferably about 200°C and when temperature Tp2 is reached, holding at the temperature Tp2 for a time between 0 and 5 minutes, preferably between 0 and 2 minutes to further reduce stresses in the article and allow further curing of the resin, wherein the temperature of the wood article is raised to a temperature preferably between 200 and 220°C,
e. Phase e; cooling the platens to a temperature Tpe while keeping the densified wood article under pressure, preferably to Tpe between 20 and 80°C, preferably between 30 and 70°C and more preferably about 60°C and at a cooling rate Spc of between 5 and 20, preferably about 15 °C/min,
f. Phase f; removing the applied pressure, opening the press and removing the resulting densified wood article.

In another embodiment of the method according to the invention, a relief structure is pressed into one or both surface planes of the densified wood article, preferably by placing a mould having a relief structure between the platens and the dried impregnated wood article or by using press platens having a relief structure.

The invention also relates to a densified wood article obtainable by the process of the above described invention. The densified wood article preferably is a
a) monolithic wood slab impregnated with cured Phenol-formaldehyde resin,
b) having a thickness of at least 5 mm, preferably at least 10 mm and preferably below 100, 60, 40 or 30 mm,
c) having density of at least 800 g/cm³, preferably at least 900 g/cm³ or more preferably at least 1000 g/cm³,
d) having a set recovery of below 7%, more preferably below 5 or even 3%.

Compared to typical set recovery of 60 - 80 % of known THM treated solid wood this invention presents considerable advance beyond the state of the art and offers high commercialization potential.

The set recovery is improved already significantly by reducing the moisture sensitivity of the surface areas by the densification and by the presence of the cured PF resin at the surface where the wood article is exposed to moisture or humidity. However, a much better set-recovery is achieved in the process of the invention because it results in a very good impregnation throughout the thickness of the wood article. Preferably, the densified wood article has a density profile, characterised by a density at 50% of the article thickness Rc of at least 60%, preferably at least 70, 80 or even 90% of the density Rs at the surface of the densified wood article and preferably this is after conditioning at 20°C at 65%RH.

The densified wood article of claims 4 or 5, further characterised by one or more of the features a) - c);
a) having an elasticity modulus MoE of more than 5, preferably more than 10 GPa,
b) a modulus of rupture MoR of at least 75, preferably at least 100 GPA, MoE and MoR being determined in a three-point bending tests according to DIN 52186,
c) a decay resistance, defined as the mass loss before and after exposing the samples to white rot fungus Trametes versicolor for 10 weeks, of less than 20, preferably less than 15 or even less than 10 or 5%. The method for the determination of these features is described in more detail below.

The invention also relates to an aqueous PF resin composition suitable for use in the method of the invention as described above in the method according to the invention with the difference that the an alkaline catalyst is not mixed into the composition, but is provided as separate part for mixing into the composition shortly before use, to provide a resulting pH value of between 7.5 and 11, preferably around 10. The aqueous PF resin composition comprises the alkaline catalyst shortly before use of the composition. As described the composition preferably does not comprising urea, urea-derivatives or other formaldehyde scavengers because that may result in poorer storage stability of the resin, in poorer resin impregnation and compression properties and poorer properties of the final product.

The low molecular weight PF resin enables densification of thicker wood blocks, preferably having an initial thickness of at least 10, 25 or even more than 50 mm. Penetration of the PF resin composition into the cell walls leads to plasticization of the cell walls and fixation of compressive deformation. Compared to commercialized products, higher degrees of densification (even up to a 300 % increase in density) can be achieved with a small amount of PF resin, typically between 1 and 15 wt.%, preferably between 2 and 10 wt.% more preferably between 3 and 8 wt.% PF resin in the densified wood article.

The PF resin composition must have long enough storage stability to ensure complete impregnation over a time period that is needed for the industrial process. The resin preparation is preferably designed such that the period of infinite water dilutability exceeds 6 weeks storage at 25°C or 8 weeks at 20°C.

The invention also relates to a process for the manufacture of the aqueous phenol-formaldehyde resin composition of the invention, comprising
a) Contacting phenol and formaldehyde, preferably in near stoichiometric amounts, wherein stoichiometric amounts means molar amounts of reactive sites of the phenolic ring to formaldehyde molecules, in an aqueous solution, preferably in a total amount of phenol and formaldehyde between 30 and 60 wt.%, preferably about 50 wt.% relative to the total weight of the aqueous solution and,
b) Adding an alkaline catalyst, to provide a pH value of between 7.5 and 11, preferably around 10,
c) Raising the temperature and perform a condensation reaction at a temperature between 40 and 100°C, preferably between 45 and 80°C, more preferably between 60 and 80 °C, most preferably between 65 and 70 °C,
d) stop the condensation reaction by cooling when the water tolerance of the formed phenol-formaldehyde resin composition in an aqueous sodium chloride solution with a concentration of 10% is between 1:10 and 1:30, preferably 1:15 and 1:20.

An advantage of the process of the invention, apart from providing an aqueous PF resin composition that is advantageous for impregnation of wood as described above, is that it results in low free formaldehyde and free phenol and thus avoids the necessity to use formaldehyde scavengers in the composition.

The invention also relates to the use of the aqueous PF resin composition of the invention in a process for the manufacture of densified wood articles and to the use of the densified wood article or a part of densified wood article of the invention in value-added applications requiring high-strength/stiffness such as furniture, flooring, and construction beams, typically for tropical hardwood replacement, for example a chair, table, pot, crockery, building construction beam, door, skirting board, floor, counter top, stair step, stair balustrade, shelve, closet, cupboard, tools, jewelry.

The densified wood articles can be used as base material in a process for the production of articles comprising wood, for example by shaping by machine tooling a densified monolithic wood slab according to the invention, preferably having a density profile characterised by a density at 50% of the article thickness Rc of at least 80%, preferably at least 90% of the density Rs at the surface of the densified monolithic wood slab.

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention. The invention is further illustrated by the following examples.

### Experimental Methods

### Density

Density of the wood specimens was measured by an immersion method. Density profiles were determined by measuring the density of specimens at various depths, wherein depth is expressed as a percentage of the article thickness.

### Set recovery

Set recovery is defined as a percentage increase in thickness on exposure to moisture. The thickness of the specimens was measured at the start (Tstart), and after soaking (Ts). Multiple cycles of soaking and drying may be performed, such that there are multiple after soaking thicknesses (Ts,1, Ts,2, Ts,3, ..., Ts,n). Set recovery after the n-th cycle is thus defined as [(Ts,n - Tstart)/(Tstart)] x 100%. The wood specimens were soaked in water at 20 °C for 24 hours, after which the thickness increase was measured. Multiple cycles of subsequent drying and soaking were performed. Drying is performed as described above for the drying step.

### Modulus of Elasticity (MoE), Modulus of Rupture (MoR)

The moduli of elasticity and rupture were determined using three-point bending tests. Tests were based on DIN 52186. Specimens were prepared with dimensions of 10 mm (thickness) x 20 mm (width) x 180 mm (length). A span of 150 mm was used to maintain a span to depth ratio of 15. Specimens were tested at a rate of 5 mm/min to achieve failure within 90 sec as prescribed.

### Fungal degradation

Fungal degradation was determined by exposing samples to white rot fungi, Trametes versicolor. Fungal degradation was evaluated based on mass loss after exposure.

A 4.2% potato dextrose agar (PDA) medium was sterilised in an autoclave (A-21 CA Kambič) at 121°C for 20 minutes before being transferred to pre-sterilized petri dishes. The petri dishes were inoculated with Trametes versicolor. After inoculation of fungi, the petri dishes were kept at 26°C in the Kambič growing chamber until the fungi completely colonized media surface.

Wood samples of 20 mm x 20 mm x 9.8 mm were dried at 103°C for 24 hours and weighed. After specimens were sterilized at 134°C for 30 minutes in an autoclave (A-21 CA Kambič), they were placed on the surface of the inoculated test fungi in petri dishes. The specimens were exposed to fungi for 2, 4, 6, 8, and 10 weeks in an incubator chamber at 26°C.

After 2, 4, 6, 8, and 10 weeks of exposure, 10 samples of each group were taken out, cleaned (surface mycelium removed), and dried at 103°C for 24 hours. The mass loss was determined by the difference between the dry weight of each specimen before and after the fungal degradation test.

### Example 1: Preparation of a resin composition

A PF resin was synthesized having a low molecular weight, low monomer content, and long storage stability at ambient temperature. A mixture of phenol, water, an aqueous 50 wt.% formaldehyde solution and an alkaline catalyst was prepared with relative amounts 30 wt.% water, 29.5 wt.% phenol, 22.5 wt.% formaldehyde, 16 wt.% amine containing component, 2 wt.% NaOH. A condensation reaction was carried out in a temperature range between 65 and 70 °C, until the tolerance of the resin solution with an aqueous sodium chloride solution with a concentration of 10% was between 1:15 and 1:20. The reaction was stopped by cooling to room temperature.

The finished resin had the following features:
- Solid content (2h/130°C/0.6g): 58.4%,
- Viscosity (20°C): 115 mPas,
- pH-value: 10.3,
- free Formaldehyde: 0.40%,
- free Phenol: 0.31%,
- Water tolerance (20°C) > 1:50,
- Average molecular weight Mw: 486 g/mol,
- Stability at 25°C until water tolerance is not infinite: 47 days.

### Example 2: Preparation of densified wood articles

Aqueous phenol resin solutions with a target solids content were prepared, by mixing the resin composition obtained in Example 1 with water. Target resin solids contents were 30 wt.% and 40 wt.%.

Poplar (Populus sp.) wood specimens were provided with a target initial thickness of 20 mm. The specimens were conditioned at 20 °C and 65% relative humidity, followed by vacuum impregnating at 0.001 bar for 60 minutes. After impregnation, the specimens were air dried overnight, followed by drying at 60 °C in an oven for 48 hours or 60 hours.

The samples then underwent THM treatment in a hot press equipped with a water-cooling system (Langzauner Perfect typ LZT-UK-30-L). The target thickness was 9.8 mm. The samples entered the press at a platen temperature of 170°C. Mechanical force was applied until target thickness was reached and held for 2 - 3 minutes. Platen temperature was increased to 200 °C, and the samples held for a further 0 - 2 minutes. The platens were then cooled to 60 °C at a rate of 15 °C/min, after which the press was opened, and the samples removed. Samples were then post-conditioned at 20 °C and 65% relative humidity. Control samples were prepared by densifying in the same way specimens that were non-impregnated. Table 1 details the initial thickness TH1 in mm, initial (wet) density D1 in g/cm3, compressed thickness TH2 in mm and compressed density D2 in g/cm3 of the poplar specimens with different Resin solids contents RS and drying time DT in hrs.

**Table 1**

| Sample | RS | DT | TH1 | D1 | TH2 [mm] | D2 |
|---|---|---|---|---|---|---|
| 1 | 30 | 48 | 20.0 | 0.468 | 9.81 | 1.038 |
| 2 | 30 | 60 | 19.9 | 0.364 | 9.89 | 0.858 |
| 3 | 40 | 48 | 19.9 | 0.431 | 9.85 | 0.970 |
| 4 | 40 | 60 | 19.8 | 0.415 | 9.73 | 0.925 |
| Control | - | - | 19.8 | 0.395 | 9.66 | 0.740 |

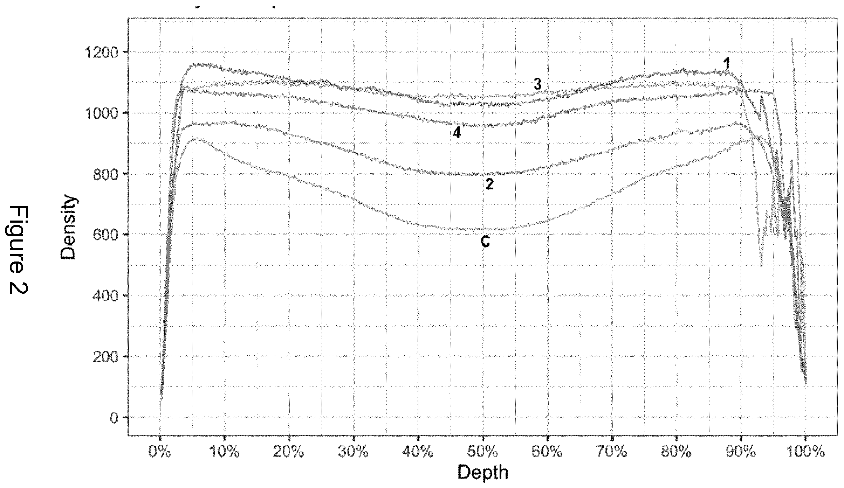

Density profiles of the samples were also determined. These are shown in Figure 2. The numbers conform to the sample numbers, and C to the Control sample. As can be seen, the density in the center of the impregnated samples is higher than of the control sample.

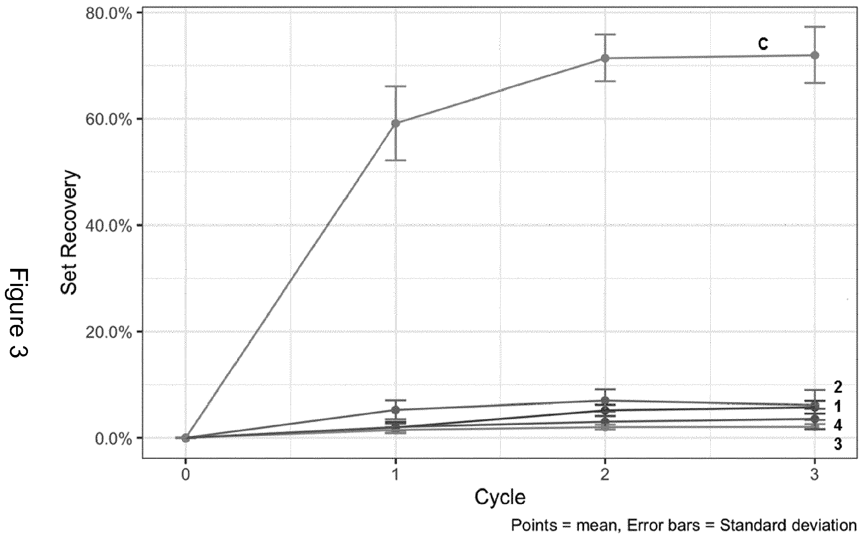

The set recovery of the samples was determined over 3 cycles. These results are shown in Figure 3. The impregnated samples produced much lower set recovery values (between 2 and 5%) than the control (approximately 72%).

The MoE and MoR of the samples were determined. Higher density of THM specimens resulted in higher MoE values. The same relations were found for MoR of THM treated specimens. As the densities of the densified specimens are not significantly different, also the MoE values do not significantly differ among the THM treated specimens. However, the specimens D-30-60 (Sample 2) with density lower than other densified specimens had lower MoE and MoR. The same relations were found for MoR of THM treated specimens. The control samples, although having lower density after densification, had comparable MoE and MoR to resin impregnated specimens.

### Example 3: Fungal Degradation Test

A sample (No. 5) was provided according to the method as described above, wherein the impregnating resin had a 30% solids content and the sample was oven dried for 72 hours. Two controls were provided: one densified without resin impregnation and an untreated control.

A fungal degradation test was performed on these samples. After 4 weeks of exposure, sample 5 had a mass loss of about 5%. The controls had a moss loss of around 12-13 %. After 6 weeks of exposure, sample 5 had a mass loss of about 5%, the densified control had a mass loss of about 12% and the untreated control had a mass loss of about 15%. The mass loss of the untreated control continued, while the mass loss of sample 5 and the densified control stabilized around 13%.

## Claims

1. Method for preparing a densified wood article, comprising
i. Providing a wood article, said wood article:
a) having at least two substantially parallel surface planes having an initial thickness TH1 defined as the distance between the substantially parallel surface planes,
b) said initial thickness TH1 preferably being at least 5 mm,
c) is a porous low-density type of wood having a density of preferably lower than 700 g/cm³, more preferably between 100 and 600, more preferably between 200 and 500 g/cm³,
d) preferably a deciduous or coniferous wood type,
ii. preferably conditioning the provided wood article for ensuring equilibrium moisture content, preferably at a temperature between 15 and 25 °C and at a relative humidity RH between 55 and 80%, most preferably around 20°C and 65% RH ,
iii. Providing an aqueous phenol-formaldehyde (PF) resin composition, said aqueous phenol-formaldehyde resin composition:
a) having a 20 - 50 wt.%, preferably 30 - 40 wt.% solids content, wherein wt.% is defined as the dry resin solids weight relative to the total weight of water and resin in the composition,
b) comprising phenol-formaldehyde resin oligomers having a low weight average molecular weight (Mw), as measured by size exclusion chromatography SEC of 150 - 700, preferably 200 - 500 g mol⁻¹,
c) having a period of infinite water dilutability exceeding 4, preferably 6 weeks storage at 25°C or 8 weeks at 20°C
d) having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
e) preferably having a viscosity between 50 and 250 mPas, more preferably between 90 and 130, most preferably around 115 mPas (determined at 20°C with viscometer MCR 51 from Anton Paar with cone CP50-1 and a shear rate of 1/200),
f) comprising an alkaline catalyst,
g) preferably having a pH value of between 7.5 and 11, preferably around 10,
h) preferably not comprising urea, urea-derivatives or other formaldehyde scavengers,
iv. vacuum impregnating the wood article with the resin composition,
∘ preferably at a pressure Pi below 0.01 bar and for a time ti between 10 and 240 minutes, preferably P is around 0.001 bar and ti is around 60 minutes,
∘ whereby the resin content of the wood article after vacuum impregnation is preferably between 25 and 45, more preferably between 30 % and 40 % weight of the unimpregnated wood article,
v. drying the resulting impregnated wood article,
∘ the drying preferably comprising an oven drying step and more preferably also a preceding air-drying step,
• wherein the oven drying step is at a temperature Td between 50 and 80°C, preferably about 60 °C, for a time between 48 and 60 hours, and
• wherein the optional preceding air-drying step is done for at least 24 hours preferably in ambient air,
vi. performing a thermal hydro mechanical treatment on the dried impregnated wood article to produce the densified wood article, said treatment comprising compressing the dried impregnated wood article at elevated temperature,
∘ wherein compression force is applied to the dried impregnated wood article to reduce the thickness to a final thickness TH2 between 25% and 80% of the initial thickness TH1,
∘ wherein the temperature of the dried impregnated wood article T_{WA} is raised to cure the impregnated phenol-formaldehyde resin, preferably to a Twa between 125 and 250, preferably between 150 and 200, more preferably about 170 °C,
∘ cooling the obtained densified wood article,
vii. optionally post-conditioning the densified wood article at ambient conditions, preferably at 20°C and 65 % relative humidity,
whereby the resulting densified wood article has a set recovery, defined as a percentage increase to thickness TH3 after 24h/20°C water soaking ((TH3-TH2)/TH2x100%), less than 7%, preferably less than 5% and more preferably less than 3 or 2 %.

2. The method according to claim 1, wherein the thermal hydro mechanical treatment comprises compressing the dried impregnated wood article at elevated temperature between platens of a mechanical press, comprising in
a. Phase a; heating the press platens, preferably to a temperature Tp1 between 125 and 250, preferably between 150 and 200, more preferably about 170 °C,
b. Phase b; placing the dried impregnated wood article in the press and pressing to the envisaged thickness TH2, preferably with an applied pressure P, preferably between 6.5 kPa and 34.0 kPa, more preferably between 13.0 kPa and 27.0 kPa, more preferably about 20 kPa,
c. Phase c; when a target thickness TH2 is reached, holding the pressure for a time between 1 - 5 minutes, preferably 2 - 3 minutes,
d. Phase d; increase the platen temperature to a higher temperature Tp2 between 170 and 250 °C, preferably about 200°C and when temperature Tp2 is reached, holding at the temperature Tp2 for a time between 0 and 5 minutes, preferably between 0 and 2 minutes,
e. Phase e; cooling the platens to a temperature Tpe while keeping the densified wood article under pressure, preferably to Tpe between 20 and 80°C, preferably between 30 and 70°C and more preferably about 60°C and at a cooling rate Spc of between 5 and 20, preferably about 15 °C/min,
f. Phase f; removing the applied pressure, opening the press and removing the resulting densified wood article.

3. The method according to claim 2, wherein a relief structure is pressed into one or both surface planes of the densified wood article, preferably by placing a mold having a relief structure between the platens and the dried impregnated wood article or by using press platens having a relief structure.

4. A densified wood article obtainable by the process of claims 1 - 3

5. The densified wood article of claim 4, being
a) a monolithic wood slab impregnated with cured Phenol-formaldehyde resin,
b) having a thickness of at least 5 mm, preferably at least 10 mm and preferably below 100, 60, 40 or 30 mm,
c) having density of at least 800 g/cm³, preferably at least 900 g/cm³ or more preferably at least 1000 g/cm³,
d) having a set recovery of below 7%, more preferably below 5 or even 3%
e) preferably having a density profile, **characterised by** a density at 50% of the article thickness Rc of at least 60%, preferably at least 70, 80 or even 90% of the density Rs at the surface of the densified wood article and preferably also after conditioning at 20°C at 65%RH.

6. The densified wood article of claims 4 or 5, further **characterised by** one or more of the features a) - c);
a) having an elasticity modulus MoE of more than 5, preferably more than 10 GPa,
b) a modulus of rupture MoR of at least 75, preferably at least 100 GPA, MoE and MoR being determined in a three-point bending tests according to DIN 52186,
c) a decay resistance, defined as the mass loss before and after exposing the samples to white rot fungus Trametes versicolor for 10 weeks, of less than 20, preferably less than 15 or even less than 10 or 5%.

7. An aqueous phenol-formaldehyde resin composition for use in the method of claims 1 - 3, **characterised by**:
a. having a 20 - 50 wt.%, preferably 30 - 40 wt.% solids content, wherein wt.% is defined as the dry resin solids weight relative to the total weight of water and resin in the composition,
b. comprising phenol-formaldehyde resin oligomers having a low weight average molecular weight (Mw), as measured by size exclusion chromatography SEC of 150 - 700, preferably 200 - 500 g mol⁻¹,
c. having a period of infinite water dilutability exceeding 4, preferably 6 weeks storage at 25°C or 8 weeks at 20°C
d. having a low free monomer content, preferably a free phenol and free formaldehyde content each less than 0.7 wt.%, preferably less than 0.5 wt.% and more preferably having a total free phenol and free formaldehyde content less than 0.7 wt.% relative to the total weight of the PF resin composition,
e. preferably having a viscosity between 50 and 250 mPas, more preferably between 90 and 130, most preferably around 115 mPas (determined at 20°C with viscometer MCR 51 from Anton Paar with cone CP50-1 and a shear rate of 1/200),
f. comprising an alkaline catalyst mixed in the composition or as separate part for mixing into the composition shortly before use, to provide a resulting pH value of between 7.5 and 11, preferably around 10,
g. preferably not comprising urea, urea-derivatives or other formaldehyde scavengers.

8. A process for the manufacture of the aqueous phenol-formaldehyde resin composition of claim 7, comprising
a) Contacting phenol and formaldehyde, preferably in near stoichiometric amounts, in an aqueous solution, preferably in a total amount of phenol and formaldehyde between 30 and 60 wt.%, preferably about 50 wt.% relative to the total weight of the aqueous solution and,
b) Adding an alkaline catalyst, to provide a pH value of between 7.5 and 11, preferably around 10,
c) Raising the temperature and perform a condensation reaction at a temperature between 40 and 100°C, preferably between 45 and 80°C, more preferably between 60 and 80 °C, most preferably between 65 and 70 °C,
d) stop the condensation reaction by cooling when the water tolerance of the formed phenol-formaldehyde resin composition in an aqueous sodium chloride solution with a concentration of 10% is between 1:10 and 1:30, preferably 1:15 and 1:20.

9. Use of the aqueous phenol-formaldehyde resin composition of claim 7 in a process for the manufacture of densified wood articles.

10. Use of the densified wood article or a part of densified wood article of claims 4- 6, in value-added applications requiring high-strength/stiffness such as furniture, flooring, and construction beams, typically for tropical hardwood replacement, for example a chair, table, pot, crockery, building construction beam, door, skirting board, floor, counter top, stair step, stair balustrade, shelve, closet, cupboard, tools, jewelry.

11. A process for the production of articles comprising wood, comprising shaping by machining tooling a densified monolithic wood slab according to claims 4- 6, preferably having a density profile **characterised by** a density at 50% of the article thickness Rc of at least 80%, preferably at least 90% of the density Rs at the surface of the densified monolithic wood slab.
